# EUROPÄISCHE PATENTSCHRIFT

(11) **EP 2 927 695 B1**
(45) Veröffentlichungstag und Bekanntmachung des Hinweises auf die Patenterteilung: **22.08.2018**
(21) Anmeldenummer: 14162952.7
(22) Anmeldetag: 31.03.2014
(51) Int. Cl.: G01N 35/02, B65G 54/02, G01N 35/04, G01N 35/00

(54) **Probenverteilungssystem und Laborautomatisierungssystem**
Sample distribution system and laboratory automation system
Système de distribution d'échantillons et système d'automatisation de laboratoire

(43) Veröffentlichungstag der Anmeldung: 07.10.2015
(73) Patentinhaber: Roche Diagnostics GmbH, 68305 Mannheim (DE); F. Hoffmann-La Roche AG, 4070 Basel (CH)
(72) Erfinder: Sinz, Achim, 71332 Waiblingen (DE); Riether, Christian, 64367 Mühltal (DE)
(74) Vertreter: Patentanwälte Ruff, Wilhelm, Beier, Dauster & Partner mbB

(56) Entgegenhaltungen:
- WO-A1-2010/129715
- WO-A1-2013/064656
- JP-A- 2009 300 402
- US-A1- 2012 211 645

## Beschreibung

### Anwendungsgebiet und Stand der Technik

Die Erfindung betrifft ein Probenverteilungssystem mit einer Anzahl von Probenträgern, die zur Aufnahme eines oder mehrerer Probenbehälter ausgebildet sind, und ein Laborautomatisierungssystem mit einem solchen Probenverteilungssystem. Das Probenverteilungssystem ist dazu vorgesehen, Proben in Probenbehältern zu einer Mehrzahl von unterschiedlichen Stationen des Laborautomatisierungssystems zu transportieren.

Das Dokument WO 2013/064656 A1 zeigt ein Probenverteilungssystem mit einer Anzahl von Probenträgern, die dazu ausgebildet sind, einen Probenbehälter, beispielsweise in Form eines Probenröhrchens, aufzunehmen. In den Probenbehältern sind zu analysierende Proben, beispielsweise Blutproben, enthalten. Das Probenverteilungssystem weist weiter eine Transportfläche auf, die dazu ausgebildet ist, die Probenträger zu tragen. Durch elektromagnetische Aktuatoren können die Probenträger über die Transportfläche bewegt werden.

Die WO 2010/129715 A1 zeigt ein Verfahren zum Erkennen eines Überkochens und ein zugehöriges System im Kontext einer Heizvorrichtung.

Die JP 2009-300402 A zeigt einen Analyzer mit einem Flüssigkeitsleckdetektor, der ein Flüssigkeitsleck eines Reaktionskessels 5 erkennt, wobei bei einem erkannten Flüssigkeitsleck der Reaktionskessel nicht mehr verwendet wird.

Die US 2012/0211645 A1 offenbart ein Sterilisierungssystem mit einem Kontaminationssensor.

Es hat sich herausgestellt, dass bei gattungsgemäßen Probenverteilungssystemen Situationen auftreten können, in welchen Teile einer Probenflüssigkeit aus einem Probenbehälter heraus schwappen kann, wodurch eine Verunreinigung der Transportfläche hervorgerufen werden kann. Dies kann dazu führen, dass nachfolgend über die verunreinigte Stelle bewegte Probenträger ebenfalls verunreinigt werden und somit eine Verteilung der Verunreinigung über die Transportfläche sowie eine mögliche Kreuzkontamination erfolgt.

### Aufgabe und Lösung

Es ist deshalb eine Aufgabe der Erfindung, ein Probenverteilungssystem und ein Laborautomatisierungssystem vorzusehen, die in Bezug auf die Handhabung von Verunreinigungen verbessert sind. Dies wird erfindungsgemäß durch ein Probenverteilungssystem nach Anspruch 1 und ein Laborautomatisierungssystem nach Anspruch 7 gelöst. Der Inhalt der Ansprüche wird durch ausdrückliche Inbezugnahme zum Inhalt der Beschreibung gemacht.

Mittels des erfindungsgemäßen Probenverteilungssystems kann eine Verunreinigung auf der Transportfläche erkannt werden, so dass in geeigneter Weise darauf reagiert werden kann.

Die Verunreinigungserkennungsvorrichtung kann insbesondere dazu ausgebildet sein, Parameter wie Ort, Ausmaß, Typ, Fläche, Dicke und/oder eine andere Eigenschaft der Verunreinigung zu erkennen. Abhängig davon können beispielsweise entsprechende Maßnahmen in angepasster Weise eingeleitet werden.

Gemäß einer Ausführung weist bei einem Probenverteilungssystem
- ein jeweiliger Probenträger mindestens ein magnetisch wirksames Element auf, das dazu ausgebildet ist, mit einem mittels mindestens eines elektromagnetischen Aktuators erzeugten Magnetfeld derart wechselzuwirken, dass eine Antriebskraft auf den Probenträger bewirkt wird, und
- wobei das Probenverteilungssystem eine Steuerungseinrichtung aufweist, die dazu ausgebildet ist, die unter der Transportfläche angeordneten elektromagnetischen Aktuatoren derart anzusteuern, dass sich ein jeweiliger Probenträger auf der Transportfläche, insbesondere zweidimensional, entlang einer vorgebbaren Bewegungsbahn bewegt.

Bei einer derartigen Ausführung werden die Probenträger mittels unter der Transportfläche angeordneter elektromagnetischer Aktuatoren, insbesondere Elektromagnete, bewegt.

Gemäß einer weiteren Ausführung
- sind die Antriebsmittel als Antriebseinrichtung in einem jeweiligen Probenträger ausgebildet,
- wobei das Probenverteilungssystem eine Steuerungseinrichtung aufweist, die dazu ausgebildet ist, die Antriebseinrichtung eines jeweiligen Probenträgers derart anzusteuern, dass sich ein jeweiliger Probenträger auf der Transportfläche entlang einer vorgebbaren Bewegungsbahn bewegt.

Bei dieser Ausführung sind die Probenträger selbstfahrend ausgebildet. Zum Erhalten von Fahrbefehlen kann beispielsweise eine drahtlose Kommunikation verwendet werden. Die Probenträger können beispielsweise jeweils einen Elektromotor und geeignete Steuerungsmittel aufweisen, um sich selbständig über die Transportfläche zu bewegen.

Gemäß einer Ausführung weist die Verunreinigungserkennungsvorrichtung eine Anzahl von Sensorfeldern auf, die auf der bzw. über die Transportfläche verteilt sind. Alternativ können die Sensorfelder auch unter der Transportfläche verteilt sein. Die Sensorfelder können gleichmäßig über die (auf/unter/in der) Transportfläche verteilt sein. Mittels der Sensorfelder kann erkannt werden, an welchem Ort auf der Transportfläche eine Verunreinigung vorliegt.

Gemäß einer Ausführung weist ein jeweiliger Probenträger einen Verunreinigungssensor auf, wobei die jeweiligen Verunreinigungssensoren Bestandteil der Verunreinigungserkennungsvorrichtung sind. Dies kann alternativ oder zusätzlich zu Komponenten der Verunreinigungserkennungsvorrichtung auf der Transportfläche vorgesehen sein. Durch die Anordnung auf dem Probenträger kann ein Verunreinigungssensor bereits ein Warnsignal abgeben und entsprechende Maßnahmen auslösen, wenn eine Verunreinigung bislang nur auf dem Probenträger, jedoch noch nicht auf der Transportfläche angekommen ist. Durch geeignete Maßnahmen, beispielsweise Anhalten des Probenträgers, können weitere Kontaminationen verhindert werden.

Gemäß einer Ausführung weist die Verunreinigungserkennungsvorrichtung eine kapazitive berührungsempfindliche Fläche auf. Unter einer kapazitiv berührungsempfindlichen Fläche wird eine Fläche verstanden, deren wirksame Kapazität sich in Abhängigkeit von einer Berührung bzw. Verschmutzung verändert. Die kapazitive Fläche kann derart ausgestaltet sein, dass eine Position bzw. ein Ort einer Berührung bzw. Verschmutzung bestimmbar ist. Mittels der kapazitiv berührungsempfindlichen Fläche können kapazitätsverändernde Verunreinigungen zuverlässig erkannt werden. Die berührungsempfindliche Fläche kann insbesondere auf oder unter der Transportfläche angeordnet sein. Sie kann in einzelne Felder unterteilt sein, um eine Positionsbestimmung der Verunreinigung zu ermöglichen.

Gemäß einer möglichen Ausführung weist die Verunreinigungserkennungsvorrichtung eine erste und eine zweite (Kondensator-) Platte auf, welche jeweils elektrisch leitfähig sind oder elektrisch leitfähig beschichtet sind. Dies ermöglicht eine einfache und zuverlässige Erkennung einer Kapazitätsänderung aufgrund einer Verunreinigung. Eine solche Kombination zweier Platten kann sowohl auf der Transportfläche als auch auf einem Probenträger vorgesehen sein.

Die Steuerungseinrichtung steht in Signalverbindung mit der Verunreinigungserkennungsvorrichtung, wobei die Steuerungseinrichtung dazu ausgebildet ist, in Abhängigkeit von einer erkannten Verunreinigung die Bewegung der Probenträger zu steuern. Damit kann in geeigneter Weise auf eine erkannte Verunreinigung reagiert werden. Sofern die Verunreinigungserkennungsvorrichtung in einem Probenträger ausgebildet ist, kann beispielsweise eine Funkverbindung vorgesehen sein.

Die Verunreinigungserkennungsvorrichtung ist dazu ausgebildet, eine Position einer Verunreinigung auf der Transportfläche zu bestimmen, wobei die Steuerungseinrichtung dazu ausgebildet ist, die Bewegungsbahn eines jeweiligen Probenträgers derart zu bestimmen, dass diese nicht über die Position der Verunreinigung verläuft. Damit kann wirksam einer Verteilung der Verunreinigung und Kreuzkontaminationen entgegengewirkt werden.

Die Verunreinigungserkennungsvorrichtung kann auch dazu ausgebildet sein, Parameter wie Ort, Ausmaß, Typ, Fläche, Dicke und/oder andere Eigenschaften einer Verunreinigung zu bestimmen, wobei die Steuerungseinrichtung auch derartige Eigenschaften bei einer Reaktion auf die Verunreinigung zur Bewegungssteuerung der Probenträger auf der Transportfläche verwenden kann.

Beispielsweise kann eine Ausschlussfläche, beispielsweise ein Kreis mit einem bestimmten Radius oder ein Quadrat mit einer bestimmten Kantenlänge, um die Position der Verunreinigung herum festgelegt werden, wobei in diese Ausschlussfläche kein Probenträger mehr bewegt wird, bis die Verunreinigung behoben ist.

Gemäß einer Ausführung kann die Steuerungseinrichtung dazu ausgebildet sein, eine eventuelle Bewegung von Probenträgern, welche sich an der Position der Verunreinigung oder in einem vorgegebenen Abstand dazu befinden, nach Erkennen der Verunreinigung zu stoppen. Damit kann verhindert werden, dass ein Probenträger, welcher sich unmittelbar benachbart zur Verunreinigung befindet und somit mit hoher Wahrscheinlichkeit mit der Verunreinigung kontaminiert wird, auf der Transportfläche weiterfährt und somit die Verunreinigung auf der Transportfläche verteilt. Beispielsweise können alle Probenträger innerhalb der weiter oben beschriebenen Ausschlussfläche angehalten werden. Diese Ausschlussfläche kann auch separat für den Zweck des Anhaltens von Probenträgern verwendet werden.

Gemäß einer Ausführung ist die Steuerungseinrichtung dazu ausgebildet, bei einer erkannten Verunreinigung alle Probenträger zu stoppen bzw. anzuhalten. Damit kann eine besonders zuverlässige Verhinderung der Verbreitung der Verunreinigung erreicht werden. Außerdem ist diese Ausführung insbesondere dann anwendbar, wenn die Verunreinigungserkennungsvorrichtung nicht dazu ausgebildet ist, die Position einer Verunreinigung auf der Transportfläche zu erkennen.

Das Laborautomatisierungssystem weist eine Anzahl (beispielsweise zwischen zwei und zwanzig) von präanalytischen und/oder analytischen und/oder postanalytischen Stationen auf, die dazu ausgebildet sind, Probenbehälter und/oder Proben, die in den Probenbehältern enthalten sind, zu bearbeiten oder zu verarbeiten. Das Bearbeiten bzw. Verarbeiten kann beispielsweise ein Lesen eines Barcodes, ein Entfernen einer Kappe auf dem Röhrchen, ein Zentrifugieren der Probe, ein Aliquotieren der Probe, ein Analysieren der Probe usw. umfassen. Das Laborautomatisierungssystem weist weiter ein oben genanntes Probenverteilungssystem zum Transportieren der Probenbehälter zwischen den präanalytischen, analytischen und postanalytischen Stationen auf.

Die präanalytischen, analytischen und postanalytischen Stationen können beispielsweise mindestens eine Station aus der Menge folgender Stationen aufweisen: eine Kappenentfernungsstation zum Entfernen von Kappen bzw. Verschlüssen auf Probenröhrchen, eine Kappenaufbringstation zum Aufbringen von Kappen bzw. Verschlüssen auf Probenröhrchen, eine Aliquotierstation zum Aliquotieren von Proben, eine Zentrifugierstation zum Zentrifugieren von Proben, eine Archivierstation zum Archivieren von Proben, eine Pipettierstation zum Pipettieren, eine Sortierstation zum Sortieren von Proben bzw. Probenröhrchen, eine Probenröhrchentypbestimmungsstation zum Bestimmen eines Typs eines Probenröhrchens und eine Probenqualitätsbestimmungsstation zum Bestimmen einer Probenqualität.

### Kurze Beschreibung der Zeichnung

Die Erfindung wird nachfolgend unter Bezugnahme auf die Zeichnung detailliert beschrieben. Hierbei zeigt schematisch:

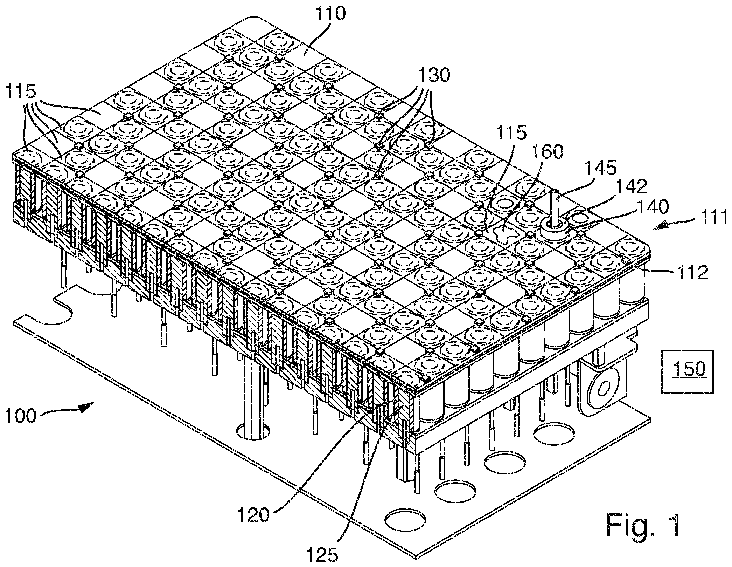

- Fig. 1: ein Probenverteilungssystem.

### Detaillierte Beschreibung des Ausführungsbeispiels

Fig. 1 zeigt ein Probenverteilungssystem 100. Das Probenverteilungssystem 100 weist eine Transportfläche 110 auf, auf welcher eine Anzahl von Probenträgern 140 verfahrbar sind. Vorliegend ist exemplarisch lediglich ein Probenträger 140 mit einem darin enthaltenen Probenbehälter 145 in Form eines Probenröhrchens gezeigt.

Auf der Transportfläche 110 ist eine Verunreinigungserkennungsvorrichtung 111 ausgebildet, welche vorliegend eine kapazitive berührungsempfindliche Fläche 112 aufweist, die mittels zweier Platten ausgebildet ist. Jede der beiden Platten weist dabei eine elektrisch leitfähige Beschichtung auf. Damit kann eine Kapazitätsänderung, welche durch eine auf der Verunreinigungserkennungsvorrichtung 111 befindliche Verunreinigung 160 ausgelöst wird, durch geeignete, nicht gezeigte Messeinrichtungen erkannt werden. Hinsichtlich der grundsätzlichen Funktion von kapazitiv berührungsempfindlichen Flächen sei auch auf die einschlägige Fachliteratur verwiesen.

Die Fläche 112 ist in eine Vielzahl von Feldern 115 aufgeteilt. Jedes Feld 115 kann einzeln und unabhängig von den anderen Feldern 115 hinsichtlich seiner Kapazität vermessen werden. Dies ermöglicht es, eine Verunreinigung 160 auf der Transportfläche 110 nicht nur zu erkennen, sondern auch zu lokalisieren.

Unter der Fläche 112 ist eine Anzahl von elektromagnetischen Aktuatoren in Form von Elektromagneten 120 mit jeweiligen Kernen 125 angeordnet. In dem Probenträger 140 befindet sich ein Permanentmagnet, so dass durch geeignete Ansteuerung der Elektromagnete 120 eine Kraft auf den Probenträger 140 ausgeübt werden kann. Damit kann der Probenträger 140 über die Transportfläche 110 bewegt werden.

Um eine Position eines Probenträgers 140 auf der Transportfläche 110 zu erkennen, ist weiterhin eine Anzahl von Hall-Sensoren 130 auf der Transportfläche 110 angeordnet.

Wie gezeigt ist jedem der Felder 115 entweder ein Elektromagnet 120 oder kein Elektromagnet zugeordnet. Die Felder 115 sind jeweils quadratisch und sind aneinander angrenzend gleichmäßig über die Transportfläche 110 verteilt.

Beispielhaft ist eine Verunreinigung 160 auf der Transportfläche 110 dargestellt. Die Verunreinigungserkennungsvorrichtung 111 detektiert mittels der kapazitiven berührungsempfindlichen Fläche 112 an dem entsprechenden Feld 115, auf welchem sich die Verunreinigung 160 befindet, eine Veränderung der Kapazität zwischen den beiden Platten. Damit ist die Verunreinigung 160 erkannt und lokalisiert.

Zur Überwachung der Verunreinigungserkennungsvorrichtung 111 und zur Steuerung von jeweiligen Stromversorgungen der Magnete 120 ist eine elektronische Steuerungseinrichtung 150 vorgesehen. Diese kann anhand der von der Verunreinigungserkennungsvorrichtung 111, d.h. von der Fläche 112 bzw. deren Felder 115, gelieferten Signale eine Verunreinigung 160 erkennen und lokalisieren. Wie gezeigt befindet sich der Probenträger 140 unmittelbar benachbart zur Verunreinigung 160. Vorliegend ist die Steuerungseinrichtung 150 derart ausgebildet, dass sie in einem solchen Fall die Bewegung des Probenträgers 140 stoppt. Ein Verteilen der Verunreinigung 160 über die Transportfläche 110 durch den Probenträger 140 kann auf diese Weise verhindert werden.

Der Probenträger 140 weist des Weiteren eine Oberfläche 142 auf, die als Verunreinigungserkennungssensor ausgebildet ist, wobei die jeweiligen Verunreinigungserkennungssensoren sämtlicher Probenträger Bestandteile der Verunreinigungserkennungsvorrichtung 111 sind.

Die Oberfläche bzw. der Verunreinigungserkennungssensor 142 kann als kapazitiver Sensor mit zwei Platten mit jeweiliger elektrisch leitfähiger Beschichtung ausgebildet sein. Mittels des Verunreinigungserkennungssensors kann ein Überschwappen einer zumindest teilweise flüssigen Probe, die in dem Probenröhrchen 145 enthalten ist, bereits dann erkannt werden, bevor Bestandteile der Probe auf Transportfläche 110 gelangen.

Der Probenträger 140 kann über drahtlose Datenübertragungseinrichtung verfügen, die dazu ausgebildet ist, Informationen betreffend eine detektierte Verunreinigung an die elektronische Steuerungseinrichtung 150 zu übertragen. Die Bewegung des Probenträgers 140 kann für diesen Fall unverzüglich gestoppt bzw. angehalten werden, um eine weitere Verteilung der Verunreinigung zu vermeiden.

Die Steuerungseinrichtung 150 ist ferner dazu ausgebildet, Probenträger 140, welche sich auf der Transportfläche 110 bewegen, um eine erkannte Verunreinigung 160 herum zu bewegen. Hierzu werden vorgebbare Bewegungsbahnen in geeigneter Weise neu berechnet.

Das Probenverteilungssystem 100 ist Bestandteil eines Laborautomatisierungssystems mit einer Anzahl von nicht näher dargestellten präanalytischen, analytischen und postanalytischen Stationen, die angrenzend an die Transportfläche 110 angeordnet sind. Das Probenverteilungssystem 100 dient zum Transport der Probenbehälter zwischen diesen Stationen.

## Patentansprüche

1. Probenverteilungssystem (100), aufweisend:
- eine Anzahl von Probenträgern (140), die zur Aufnahme eines oder mehrerer Probenbehälter (145) ausgebildet sind,
- eine Transportfläche (110), die dazu ausgebildet ist, die Probenträger (140) zu tragen,
- eine Anzahl von elektromagnetischen Aktuatoren (120), die stationär unter der Transportfläche (110) angeordnet sind, wobei die elektromagnetischen Aktuatoren (120) dazu ausgebildet sind, einen Probenträger (140), der auf der Transportfläche (110) angeordnet ist, durch Ausüben einer magnetischen Kraft auf den Probenträger (140) zu bewegen, und
- eine Steuerungseinrichtung (150), die dazu ausgebildet ist, die unter der Transportfläche (110) angeordneten elektromagnetischen Aktuatoren (120) derart anzusteuern, dass sich ein jeweiliger Probenträger (140) auf der Transportfläche (110) entlang einer vorgebbaren Bewegungsbahn bewegt,
**gekennzeichnet durch**
- eine Verunreinigungserkennungsvorrichtung (111), die dazu ausgebildet ist, Verunreinigungen (160) auf der Transportfläche (110) zu erkennen,
- wobei die Steuerungseinrichtung (150) in Signalverbindung mit der Verunreinigungserkennungsvorrichtung (111) steht, wobei die Steuerungseinrichtung (150) dazu ausgebildet ist, in Abhängigkeit von einer erkannten Verunreinigung (160) die Bewegung der Probenträger (140) zu steuern, und
- wobei die Verunreinigungserkennungsvorrichtung (111) dazu ausgebildet, eine Position einer Verunreinigung (160) auf der Transportfläche (110) zu bestimmen, wobei die Steuerungseinrichtung (150) dazu ausgebildet ist, die Bewegungsbahn eines jeweiligen Probenträgers (140) derart zu bestimmen, dass diese nicht über die Position der Verunreinigung (160) verläuft.

2. Probenverteilungssystem (100) nach Anspruch 1, **dadurch gekennzeichnet, dass**
- die Verunreinigungserkennungsvorrichtung (111) eine Anzahl von Sensorfeldern (115) aufweist, die über die Transportfläche (110) verteilt sind.

3. Probenverteilungssystem (100) nach Anspruch 1 oder 2, **dadurch gekennzeichnet, dass** ein jeweiliger Probenträger (140) einen Verunreinigungssensor (142) aufweist, wobei die jeweiligen Verunreinigungssensoren (142) Bestandteil der Verunreinigungserkennungsvorrichtung (111) sind.

4. Probenverteilungssystem (100) nach einem der vorhergehenden Ansprüche, **dadurch gekennzeichnet, dass**
- die Verunreinigungserkennungsvorrichtung (111) eine kapazitive berührungsempfindliche Fläche (112) aufweist.

5. Probenverteilungssystem (100) nach einem der vorhergehenden Ansprüche, **dadurch gekennzeichnet, dass**
- die Steuerungseinrichtung (150) dazu ausgebildet ist, Probenträger (140), welche sich an der Position der Verunreinigung (160) oder in einem vorgegebenen Abstand dazu befinden, nach Erkennen der Verunreinigung (160) anzuhalten.

6. Probenverteilungssystem (100) nach einem der vorhergehenden Ansprüche, **dadurch gekennzeichnet, dass**
- die Steuerungseinrichtung (150) dazu ausgebildet ist, bei einer erkannten Verunreinigung (160) alle Probenträger (140) anzuhalten.

7. Laborautomatisierungssystem, aufweisend:
- eine Anzahl von präanalytischen, analytischen und/oder postanalytischen Stationen, die dazu ausgebildet sind, Probenbehälter und/oder Proben, die in jeweiligen Probenbehältern enthalten sind, zu bearbeiten,
**gekennzeichnet durch**
- ein Probenverteilungssystem zum Transportieren der Probenbehälter zwischen den präanalytischen, analytischen und/oder postanalytischen Stationen nach einem der vorhergehenden Ansprüche.

## Claims

1. Sample distribution system (100), comprising:
- a number of sample carriers (140), adapted to receive one or more sample containers (145),
- a transport surface (110), adapted to carry the sample carriers (140),
- a number of electromagnetic actuators (120), stationary arranged below the transport surface (110), wherein the electromagnetic actuators (120) are adapted to move a sample carrier (140), which is arranged on the transport surface (110), by applying a magnetic force on the sample carrier (140), and
- a control device (150), adapted to activate the electromagnetic actuators (120) arranged below the transport surface (110) such that a respective sample carrier (140) moves on the transport surface (110) along a predefinable movement path, **characterized by**
- a dirt detection device (111), adapted to detect dirt (160) on the transport surface (110),
- wherein the control device (150) is in signaling connection with the dirt detection device (111), wherein the control device (150) is adapted to control the movement of the sample carriers (140) in dependence on detected dirt (160), and
- wherein the dirt detection device (111) is adapted to determine a position of dirt (160) on the transport surface (110), wherein the control device (150) is adapted to determine the movement path of a respective sample carrier (140) such that it does not run over the position of dirt (160).

2. Sample distribution system (100) according to claim 1, **characterized in that**
- the dirt detection device (111) comprises a number of sensor fields (115) which are distributed over the transport surface (110).

3. Sample distribution system (100) according to claim 1 or 2, **characterized in that**
- a respective sample carrier (140) comprises a dirt sensor (142), wherein the respective dirt sensors (142) are a component part of the dirt detection device (111).

4. Sample distribution system (100) according to any of the preceding claims, **characterized in that**
- the dirt detection device (111) comprises a capacitive touch-sensitive area (112).

5. Sample distribution system (100) according to any of the preceding claims, **characterized in that**
- the control device (150) is adapted to stop sample carriers (140), which are located at the position of dirt (160) or at a predefinable distance from it, after detection of dirt (160).

6. Sample distribution system (100) according to any of the preceding claims, **characterized in that**
- the control device (150) is adapted to stop all the sample carriers (140) after a detection of dirt (160).

7. Laboratory automation system, comprising:
- a number of pre-analytical, analytical and/or post-analytical stations, adapted to process sample containers and/or samples which are contained in respective sample containers,
**characterized by**
- a sample distribution system for transporting the sample containers between the pre-analytical, analytical and/or post-analytical stations according to any of the preceding claims.

## Revendications

1. Système de distribution d'échantillons (100), comprenant :
- un certain nombre de porte-échantillons (140) qui sont configurés pour accueillir un ou plusieurs récipients à échantillon (145),
- une surface de transport (110) qui est configurée pour porter les porte-échantillons (140),
- un certain nombre d'actionneurs électromagnétiques (120) qui sont disposés en position fixe sous la surface de transport (110), les actionneurs électromagnétiques (120) étant configurés pour déplacer un porte-échantillon (140), qui est disposé sur la surface de transport (110), en exerçant une force magnétique sur le porte-échantillon (140), et
- un dispositif de commande (150) qui est configuré pour piloter les actionneurs électromagnétiques (120) disposés sous la surface de transport (110) de telle sorte qu'un porte-échantillon (140) correspondant sur la surface de transport (110) se déplace le long d'une trajectoire de mouvement qui peut être prédéfinie,
**caractérisé par**
- un arrangement de reconnaissance d'impureté (111) qui est configuré pour reconnaître des impuretés (160) sur la surface de transport (110),
- le dispositif de commande (150) se trouvant en liaison de signalisation avec l'arrangement de reconnaissance d'impureté (111), le dispositif de commande (150) étant configuré pour commander le mouvement des porte-échantillons (140) en fonction d'une impureté (160) reconnue, et
- l'arrangement de reconnaissance d'impureté (111) étant configuré pour déterminer une position d'une impureté (160) sur la surface de transport (110), le dispositif de commande (150) étant configuré pour déterminer la trajectoire de mouvement d'un porte-échantillon (140) correspondant de telle sorte que celle-ci ne passe pas au-dessus de la position de l'impureté (160).

2. Système de distribution d'échantillons (100) selon la revendication 1, **caractérisé en ce que** l'arrangement de reconnaissance d'impureté (111) possède un certain nombre de champs de détection (115) qui sont répartis au-dessus la surface de transport (110).

3. Système de distribution d'échantillons (100) selon la revendication 1 ou 2, **caractérisé en ce qu'**un porte-échantillon (140) correspondant possède un détecteur d'impureté (142), les détecteurs d'impureté (142) respectifs faisant partie intégrante de l'arrangement de reconnaissance d'impureté (111).

4. Système de distribution d'échantillons (100) selon l'une des revendications précédentes, **caractérisé en ce que** l'arrangement de reconnaissance d'impureté (111) possède une surface (112) sensible au toucher capacitive.

5. Système de distribution d'échantillons (100) selon l'une des revendications précédentes, **caractérisé en ce que** le dispositif de commande (150) est configuré pour stopper les porte-échantillons (140) qui se trouvent à la position de l'impureté (160) ou à un écart prédéfini de celle-ci après la reconnaissance de l'impureté (160).

6. Système de distribution d'échantillons (100) selon l'une des revendications précédentes, **caractérisé en ce que** le dispositif de commande (150) est configuré pour stopper tous les porte-échantillons (140) en présence d'une impureté (160) reconnue.

7. Système d'automatisation de laboratoire, comprenant :
- un certain nombre de stations préanalytiques, analytiques et/ou post-analytiques qui sont configurées pour traiter des récipients à échantillon et/ou des échantillons qui sont contenus dans les récipients à échantillon,
**caractérisé par**
- un système de distribution d'échantillons destiné à transporter les porte-échantillons entre les stations préanalytiques, analytiques et/ou post-analytiques selon l'une des revendications précédentes.
